# EUROPEAN PATENT APPLICATION

(11) **EP 2 424 100 A2**
(43) Date of publication of application: **29.02.2012**
(21) Application number: 11178383.3
(22) Date of filing: 23.08.2011
(51) Int. Cl.: H02M 7/219

(54) **Electric power converter**

(30) Priority: 23.08.2010 JP 2010185857
(71) Applicant: Fuji Electric Co., Ltd., Kawasaki-shi 210-9530 (JP)
(72) Inventor: Yatsu, Makoto, Kanagawa 210-9530 (JP); Okuma, Yasuhiro, Kanagawa 210-9530 (JP); Kuroki, Kazuo, Kanagawa 210-9530 (JP)
(74) Representative: MERH-IP Matias Erny Reichl Hoffmann

(57) **Abstract**

A First and second series circuits of switching devices and a series circuit of capacitors are connected in parallel. Between the connection point in the first series circuit of switching devices and the connection point in the series circuit of capacitors, a first bidirectional switch is connected and, between the connection point in the second series circuit of switching devices and the connection point in the series circuit of capacitors, a second bidirectional switch is connected. The connection point in the first series circuit of switching devices is connected through a reactor to an input-output common connection line connected to one end of an AC power supply and the other end of the AC power supply is connected to the connection point in the series circuit of capacitors.

## Description

### BACKGROUND OF THE INVENTION

### 1. Field of the Invention

The present invention relates to an electric power converter characterized in a configuration of a main circuit for supplying a stabilized voltage from an AC power supply to a load.

### 2. Background Art

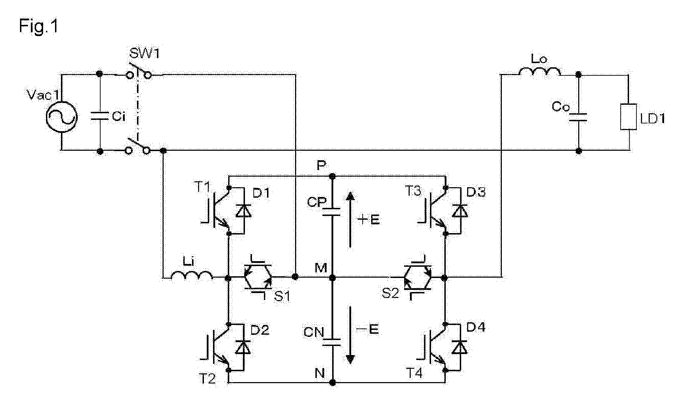

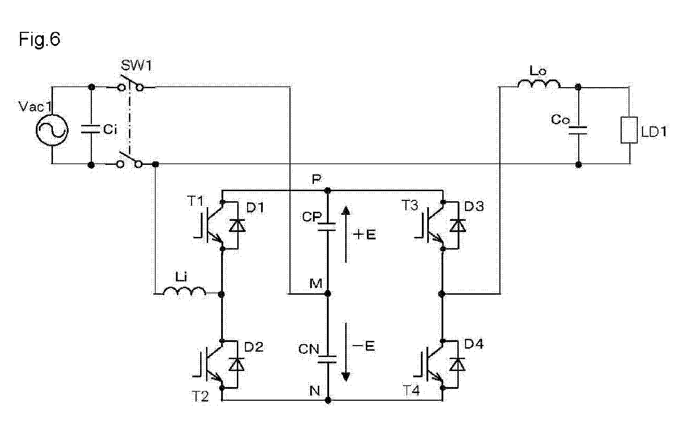

In FIG. 6, a circuit diagram is presented which shows an example of a circuit configuration of a series compensated electric power converter using a related art described in Japanese Patent No.4,329,692 (FIG. 1). This is a circuit configuration for providing series compensation for variation in the voltage of a single-phase AC power supply Vac1. One of the output lines of the single-phase AC power supply Vac1 is commonly connected to one of AC output lines through one of a pair of contactors of an interrupter switch SW1. In the specification, the line is to be referred to as an input-output common connection line.

The electric power converter is provided with a conversion circuit having a configuration with a first series circuit of switching devices, a second series circuit of switching devices and a series circuit of capacitors connected in parallel between connection points P and N. The first series circuit of switching devices is a series connection of an IGBT T1 with a diode D1 connected thereto in inverse parallel and an IGBT T2 with a diode D2 connected thereto in inverse parallel. The second series circuit of switching devices is a series connection of an IGBT T3 with a diode D3 connected thereto in inverse parallel and an IGBT T4 with a diode D4 connected thereto in inverse parallel. The series circuit of capacitors is a series connection of a capacitor CP and a capacitor CN. The connection point of the IGBTs T1 and T2 in the first series circuit of switching devices is connected through a reactor Li to the input-output common connection line to which one end of the single-phase AC power supply Vac1 and one end of a load LD1 are connected. Moreover, the connection point of the IGBTs T3 and T4 in the second series circuit of switching devices is connected to the other end of the load LD1 through a reactor Lo. Furthermore, a connection point M of the capacitor CP and the capacitor CN in the series circuit of capacitors is connected to the other end of the single-phase AC power supply Vac1. In addition, in parallel to the single-phase AC power supply Vac1, a capacitor Ci is connected and, in parallel to the load LD1, a capacitor Co is connected.

In such a configuration, when the single-phase AC power supply Vac1 is sound, by alternately switching the IGBTs T1 and T2, each of the capacitors CP and CN is charged with the voltage thereof brought up to a voltage higher than the peak voltage of the single-phase AC power supply Vac1. Here, let the electric potential at the connection point M in the series circuit of capacitors be zero, the voltage across the capacitor CP be +E and the voltage of the capacitor CN be -E. When the side of the connection point M of the single-phase AC power supply Vac1 is positive, the turning-on of the IGBT T1 makes a voltage as a sum of the output voltage of the single-phase AC power supply Vac1 and the voltage E across the capacitor CP applied to the reactor Li to increase a current. Subsequent to this, the turning-off of the IGBT T1 makes a current in the reactor Li flow a path of the single-phase AC power supply Vac1 → the capacitor CN → the diode D2, by which the energy stored in the reactor Li is transmitted so as to charge the capacitor CN.

While, on the AC output side, with the electric potential of the input-output common connection line made to be zero, by making the IGBTs T3 and T4 alternately turned-on and -off, to the reactor Lo, a voltage is applied in which a voltage across the capacitor CP is added to the voltage of the single-phase AC power supply Vac1 or a voltage across the capacitor CN is subtracted from the voltage of the single-phase AC power supply Vac1. For example, in a period in which the voltage of the single-phase AC power supply Vac1 is positive, the turning-on of the IGBT T3 makes a voltage, having a waveform of a voltage in which the voltage across the capacitor CP (+E) is added to the voltage of the single-phase AC power supply Vac1, applied to the reactor Lo. While, the turning-on of the IGBT T4 makes a voltage, having a waveform of a voltage in which the voltage across the capacitor CN is subtracted from the waveform of the voltage of the single-phase AC power supply Vac1, applied to the reactor Lo. By making the IGBT T3 and T4 carry out turning-on and -off operations depending on the variation in the voltage of the single-phase AC power supply Vac1, a voltage without voltage variation is supplied to the load LD1. Here, the reactor Lo and the capacitor Co form a filter to bear a role of shaping a pulse-train-like waveform at the connection point of the IGBT T3 and the IGBT T4 in the second series circuit of switching devices into a sinusoidal waveform with a small distortion. When the Voltage variation in the single-phase AC power supply Vac1 is sufficiently small, there is no necessity of making series compensation, so that the Voltage of the single-phase AC power supply Vac1 can be directly supplied (referred to as a through output) to a load. In the case of the circuit configuration of the related conversion circuit, such operation can be actualized by alternately switching the IGBTs T3 and T4 between turning-on and -off with a duty of 50%.

In case of power failure in the single-phase AC power supply Vac1, the single-phase AC power supply Vac1 is disconnected from the conversion circuit by the interrupter switch SW1 and inverter control of the IGBTs T1 to T4 is carried out with the capacitors CP and CN used as DC power supplies to thereby allow the electric power converter to be uninterruptible. For ensuring a long power failure time, a storage battery system is generally connected in parallel to each of the capacitors CP and CN.

[Patent Document 1] Japanese Patent No.4,329,692 (FIG. 1)

As was explained in the foregoing, in the related circuit configuration, a voltage applied to the reactor Li by the converter operation on the AC input side becomes a sum of the voltage of the single-phase AC power supply Vac1 and the voltage across the capacitor CP or CN. Therefore, for making a ripple in an output current small, a reactor with a large inductance value must be used. This increases a power loss and makes the converter have a large size.

While, on the AC output side, the waveform of a voltage applied to the reactor Lo and the capacitor Co becomes a waveform of a voltage which has the voltage across the capacitor CP added to or the voltage across the capacitor CN subtracted from the voltage of the single-phase AC power supply Vac1. This results in a large ripple voltage that necessitates the reactor Lo and the capacitor Co to be large sized with resulting large power losses.

Furthermore, in the case when the AC output is directly supplied to the load without requiring series compensation, high frequency switching of the IGBTs T3 and T4 is carried out with 50% duty. This causes a conduction loss and a switching loss to be so large as to reduce the operation efficiency of the converter.

Accordingly, an object of the invention is to solve the problems described in the foregoing and provide an electric power converter having high conversion efficiency and a small size without increasing sizes of components such as reactors and capacitors.

### SUMMARY OF THE INVENTION

For achieving the object, in a first aspect, an electric power converter is provided in which
a first series circuit of switching elements with a first and a second semiconductor switching devices, each having a diode connected in inverse parallel thereto, connected in series, and
a series circuit of capacitors with a first and a second capacitors connected in series
are connected in parallel,
between the connection point of the first and second semiconductor devices in the first series circuit of switching elements and the connection point of the first and second capacitors in the series circuit of capacitors, a first bidirectional switch means being connected,
the connection point in the first series circuit of switching elements and the connection point in the series circuit of capacitors being connected to their respective output ends of an AC power supply with at least one thereof through a reactor, and
one of output ends with both ends of the series circuit of capacitors and output ends with both of the connection point in the series circuit of capacitors and an output end of the AC power supply connected to the connection point in the first series circuit of switching elements being provided as a DC output ends.

In a second aspect, an electric power converter includes:
a first series circuit of switching devices formed with a first and a second semiconductor switching devices, each having a diode connected in inverse parallel thereto, connected in series;
a second series circuit of switching devices formed with a third and a fourth semiconductor switching devices, each having a diode connected in inverse parallel thereto, connected in series;
a series circuit of capacitors formed with a first and second capacitors connected in series;
a first bidirectional switch means connected between a series connection point in the first series circuit of switching devices and a series connection point in the series circuit of capacitors;
a second bidirectional switch means connected between a series connection point in the second series circuit of switching devices and the series connection point in the series circuit of capacitors;
a fourth capacitor connected in parallel to a load;
a first reactor connected between one end of the AC power supply, which end is connected to one end of the load, and the series connection point in the first series circuit of switching devices; and
a second reactor connected between the other end of the load and the series connection point in the second series circuit of switching devices, in which
the first series circuit of switching devices, the second series circuit of switching devices and the series circuit of capacitors are connected in parallel to be formed into a first parallel connection circuit,
the other end of the AC power supply is connected to the series connection point in the series circuit of capacitors,
the series circuit of capacitors, the second series circuit of switching devices and the second bidirectional switch means form a series converter,
the series circuit of capacitors, the first series circuit of switching devices and the first bidirectional switch means form a parallel converter, and
an amount of variation in the voltage of the AC power supply is compensated by the series converter to make a supply voltage to the load kept constant and, along with this, an amount of variation in the voltage across the capacitors caused by compensation operation of the series converter is compensated by the charging and discharging operations by the parallel converter carried out between the AC power supply and the parallel converter.

In a third aspect, in the first or second aspect, in the charging of the series circuit of capacitors, the first reactor preferably stores energy supplied from the AC power supply when the first bidirectional switch means is turned-on and, when the first bidirectional switch means is turned-off, preferably transmits the stored energy to one of the first and second capacitors in the series circuit of capacitors, which is charged by the transmitted energy.

In a fourth aspect, in the second or third aspect, the compensation operation of the series converter preferably is one of an operation in which the third semiconductor switching device and the second bidirectional switch means are alternately turned-on and -off and an operation in which the fourth semiconductor switching device and the second bidirectional switch means are alternately turned-on and -off.

In a fifth aspect, in any one of the second to fourth aspects, when the voltage of the AC power supply is directly supplied to the load as an AC output, the second bidirectional switch means preferably is brought into a turned-on state.
In a sixth aspect, in any one of the second to fifth aspects, at the time of power failure, the AC power supply is preferably disconnected from the electric power converter by a switching means,
a three-level inverter circuit is preferably formed with the first series circuit of switching devices, the second series circuit of switching devices and the first and second bidirectional switch means with the series circuit of capacitors used as a DC power supply, and
a three-level AC voltage obtained between the series connection point in the first series circuit of switching devices and the series connection point in the second series circuit of switching devices is preferably supplied to the load with the waveform of the AC voltage smoothed by the first and second reactors and the fourth capacitor.

In a seventh aspect, in any one of the first to sixth aspects, a storage battery system is preferably connected in parallel to the series circuit of capacitors.
In an eighth aspect, in any one of the first to seventh aspects, the bidirectional switch means is preferably formed with reverse blocking semiconductor devices, each being provided with a reverse voltage blocking characteristic, connected in inverse parallel.

In a ninth aspect, in any one of the first to seventh aspects, the bidirectional switch means is preferably formed with series circuits, each with a semiconductor switching device being provided with no reverse voltage blocking characteristic and a diode connected in series, connected in inverse parallel.

In a tenth aspect, in an electric power converting system, with a first phase of a three-phase AC power supply made to be common to an input and an output, the electric power converters, each being in any one of the second to ninth inventions, are connected between the first phase and a second phase and between the first phase and a third phase, respectively.

In the invention, the first series circuit of switching devices, the second series circuit of switching devices and the series circuit of capacitors are preferably connected in parallel to be formed into a parallel connection circuit. Between the connection point in the first series circuit of switching devices and the connection point in the series circuit of capacitors, the first bidirectional switch means is preferably connected and, between the connection point in the second series circuit of switching devices and the connection point in the series circuit of capacitors, the second bidirectional switch means is preferably connected. The connection point in the first series circuit of switching devices is preferably connected through the reactor to an input-output common connection line connected to one end of the AC power supply and the other end of the AC power supply is preferably connected to the connection point in the series circuit of capacitors.
With the series circuit of capacitors, the second series circuit of switching devices and the second bidirectional switch means, a series converter is preferably formed and, with the series circuit of capacitors, the first series circuit of switching devices and the first bidirectional switch means, a parallel converter is preferably formed. An amount of variation in the voltage of the AC power supply is preferably compensated by the series converter to make a supply voltage to a load kept constant and, along with this, an amount of variation in the voltage across the capacitor caused by the compensation operation of the series converter is preferably compensated by the charging and discharging operation by the parallel converter carried out between the AC power supply and the parallel converter.

As a result, in the parallel converter, when storing energy in the reactor, only the voltage of the AC power supply comes to be applied to the reactor, by which small inductance is required as being enough for the reactor. Moreover, in the series converter, a voltage added to or subtracted from the AC power supply voltage becomes only a voltage across a capacitor as one of those in the series circuit of capacitors, which can reduce the inductance of the filter reactor on the output side. Furthermore, in the case of making the AC power supply voltage directly provided as an AC output voltage, this is performed only by making the second bidirectional switch means S2 turned-on. As a result, the reactors and the filters are downsized and made to have reduced losses and the losses of the semiconductor switching devices are reduced, by which a converter can be achieved as being downsized and highly efficient.

### BRIEF DESCRIPTION OF THE DRAWINGS

FIG. 1 is a circuit diagram showing a circuit configuration of a first example of an embodiment of an electric power converter according to the invention;
FIG. 2 is a waveform diagram showing a first example of the operation of the electric power converter having the circuit configuration shown in FIG. 1;
FIG. 3 is a waveform diagram showing a second example of the operation of the electric power converter having the circuit configuration shown in FIG. 1;
FIG. 4 is a circuit diagram showing a circuit configuration of a second example of the embodiment of the electric power converter according to the invention;
FIG. 5 is a circuit diagram showing a circuit configuration of a third example of the embodiment of the electric power converter according to the invention; and
FIG. 6 is a circuit diagram showing an example of a circuit configuration of a series compensated electric power converter using related art.

### DESCRIPTION OF THE PREFERRED EMBODIMENT

The main point of the invention is as follows. The first series circuit of switching devices, the second series circuit of switching devices and the series circuit of capacitors are connected in parallel to be formed into a parallel connection circuit. Between the connection point in the first series circuit of switching devices and the connection point in the series circuit of capacitors, the first bidirectional switch means is connected and, between the connection point in the second series circuit of switching devices and the connection point in the series circuit of capacitors, the second bidirectional switch means is connected. The connection point in the first series circuit of switching devices is connected through the reactor to an input-output common connection line connected to one end of the AC power supply and the other end of the AC power supply is connected to the connection point in the series circuit of capacitors.
With the series circuit of capacitors, the second series circuit of switching devices and the second bidirectional switch means, a series converter is formed and, with the series circuit of capacitors, the first series circuit of switching devices and the first bidirectional switch means, a parallel converter is formed. An amount of variation in the voltage of the AC power supply is compensated by the series converter to make a supply voltage to a load kept constant and, along with this, an amount of variation in the voltage across the capacitor caused by the compensation operation of the series converter is compensated by the charging and discharging operation by the parallel converter carried out between the AC power supply and the parallel converter.

### [First Example]

In FIG. 1, a circuit diagram is presented which shows a circuit configuration of a first example of an embodiment of an electric power converter according to the invention. This is a circuit configuration for providing series compensation for variation in the voltage of a single-phase AC power supply Vac1. One of the output lines of the single-phase AC power supply Vac1 is commonly connected to one of AC output lines through one of a pair of contactors of an interrupter switch SW1. In the specification, the line is to be referred to as an input-output common connection line.

The electric power converter is provided with a conversion circuit having a configuration with a first series circuit of switching devices, a second series circuit of switching devices and a series circuit of capacitors connected in parallel between connection points P and N. The first series circuit of switching devices is a series connection of an IGBT T1 with a diode D1 connected thereto in inverse parallel and an IGBT T2 with a diode D2 connected thereto in inverse parallel. The second series circuit of switching devices is a series connection of an IGBT T3 with a diode D3 connected thereto in inverse parallel and an IGBT T4 with a diode D4 connected thereto in inverse parallel. The series circuit of capacitors is a series connection of a capacitor CP and a capacitor CN.
Between the connection point of the IGBTs T1 and T2 in the first series circuit of switching devices and a connection point M of the capacitor CP and the capacitor CN in the series circuit of capacitors, a first bidirectional switch means S1 is connected. Between the connection point of the IGBTs T3 and T4 in the second series circuit of switching devices and the connection point M of the capacitor CP and the capacitor CN in the series circuit of capacitors, a second bidirectional switch means S2 is connected. The connection point of the IGBTs T1 and T2 in the first series circuit of switching devices is connected through a reactor Li to the input-output common connection line to which one end of the single-phase AC power supply Vac1 and one end of a load LD1 are connected. Moreover, the connection point of the IGBTs T3 and T4 in the second series circuit of switching devices is connected to the other end of the load LD1 through a reactor Lo. Furthermore, a connection point M of the capacitor CP and the capacitor CN in the series circuit of capacitors is connected to the other end of the single-phase AC power supply Vac1. In addition, in parallel to the single-phase AC power supply Vac1, a capacitor Ci is connected and, in parallel to the load LD1, a capacitor Co is connected. When the electric power converter is used as an AC to DC converter, the connection point P or N at each end of the series circuit of capacitors or the connection point M in the series circuit of capacitors is used as one of output terminals.

In such a circuit configuration, when the single-phase AC power supply Vac1 is sound, by alternately switching the IGBT T1 and the first bidirectional switch means S1 or the IGBT T2 and the first bidirectional switch means S1, each of the capacitors CP and CN is charged with the voltage thereof brought up to a voltage higher than the peak voltage of the single-phase AC power supply Vac1. Here, let the electric potential at the connection point M in the series circuit of capacitors be zero, the voltage across the capacitor CP be +E and the voltage of the capacitor CN be -E.
When the side of the connection point M of the single-phase AC power supply Vac1 is positive, the turning-on of the first bidirectional switch means S1 makes the output voltage of the single-phase AC power supply Vac1 applied to the reactor Li to increase a current. Subsequent to this, the turning-off of the first bidirectional switch means S1 and the turning-on of the IGBT T2 make a current in the reactor Li flow a path of the single-phase AC power supply Vac1 → the capacitor CN → the diode D2, by which the energy stored in the reactor Li is transmitted so as to charge the capacitor CN. Similarly, when the side of the connection point M of the single-phase AC power supply Vac1 is negative, the turning-on of the first bidirectional switch means S1 makes the output voltage of the single-phase AC power supply Vac1 applied to the reactor Li to increase a current. Subsequent to this, the turning-off of the first bidirectional switch means S1 and the turning-on of the IGBT T1 makes a current in the reactor Li flow a path of the diode D1 → the capacitor CP → the single-phase AC power supply Vac1, by which the energy stored in the reactor Li is transmitted so as to charge the capacitor CP.
Here, the IGBTs T1 and T2 play roles of transmitting energy stored in the capacitors CP and CN, respectively, to the single-phase AC power supply Vac1 for regeneration.
By repeating the operation in the foregoing, the capacitor CP is charged with a voltage across it (+E) higher than the positive peak voltage of the single-phase AC power supply Vac1 and the capacitor CN is charged with a voltage across it (-E) lower than the negative peak voltage of the single-phase AC power supply Vac1.

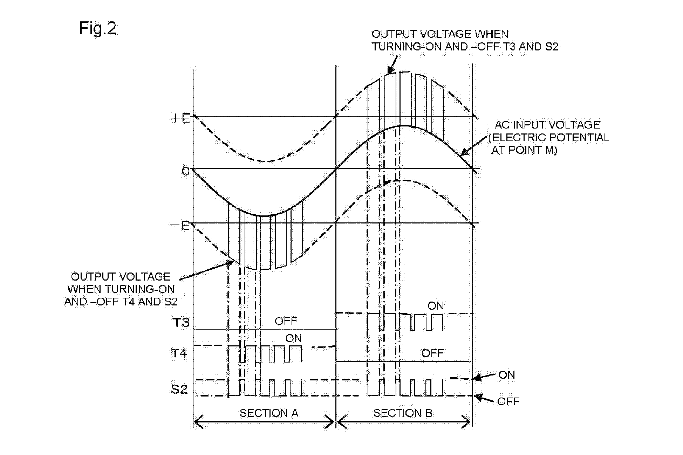

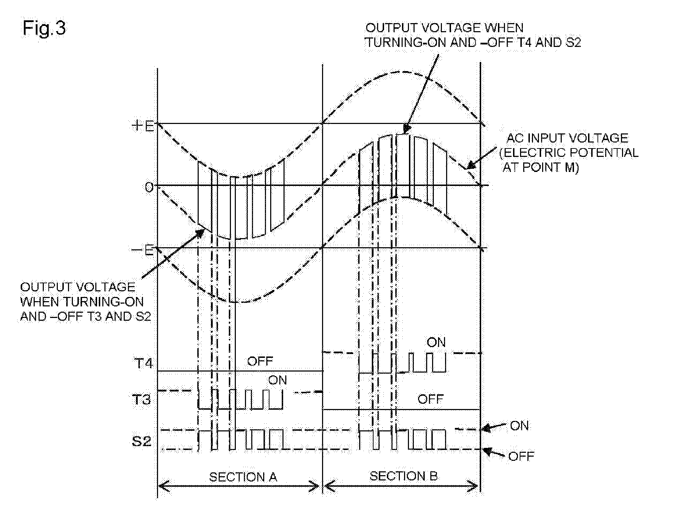

Next to this, explanations will be made with respect to operations for making series compensation of a voltage variation in the single-phase AC power supply Vac1. Waveforms in the operations are shown in FIG. 2 and FIG. 3. FIGURE 2 is a waveform diagram showing a first example of the operation of the electric power converter having the circuit configuration shown in FIG. 1. Namely, FIG. 2 is a waveform diagram showing waveforms in the case of increasing an AC output voltage by adding the voltage across the capacitor CP to a positive voltage of the single-phase AC power supply or by subtracting the voltage across the capacitor CN from (or negatively adding the voltage across the capacitor CN to) a negative voltage of the single-phase AC power supply. With the electric potential of the input-output common connection line made to be zero, by making the IGBT T3 and the second bidirectional switch means S2 alternately turned-on and -off, to the reactor Lo, a voltage is applied in which a voltage across the capacitor CP is added to the positive voltage of the single-phase AC power supply Vac1 (section B). Moreover, by making the IGBT T4 and the second bidirectional switch means S2 alternately turned-on and -off, to the reactor Lo, a voltage is applied in which a voltage across the capacitor CN is subtracted from (or negatively added to) the negative voltage of the single-phase AC power supply Vac1 (section A).
For example, in a period in which the voltage of the single-phase AC power supply Vac1 is positive (section B), the turning-on of the IGBT T3 makes a voltage, having a waveform in which the waveform of the voltage across the capacitor CP (+E) is added to the waveform of the voltage of the single-phase AC power supply Vac1, applied to the reactor Lo. While, the turning-off of the IGBT T3 and the turning-on of the second bidirectional switch means S2 makes the voltage of the single-phase AC power supply Vac1 applied to the reactor Lo. In the section A, in a period in which the voltage of the single-phase AC power supply Vac1 is negative, the turning-on of the IGBT T4 makes a voltage, having a waveform in which the waveform of the voltage across the capacitor CN (-E) is added to the waveform of the voltage of the single-phase AC power supply Vac1, applied to the reactor Lo. While, the turning-off of the IGBT T4 and the turning-on of the second bidirectional switch means S2 makes the voltage of the single-phase AC power supply Vac1 applied to the reactor Lo. The voltages with these waveforms are shaped into sinusoidal waves with little distortions by a filter including the reactor Lo and the capacitor Co to be supplied to the load LD1.

FIGURE 3 is a waveform diagram showing a second example of the operation of the electric power converter having the circuit configuration shown in FIG. 1. Namely, FIG. 3 is a waveform diagram showing waveforms in the case of decreasing an AC output voltage by adding the voltage across the capacitor CN (-E) to a positive voltage of the single-phase AC power supply or by adding the voltage across the capacitor CP (+E) to a negative voltage of the single-phase AC power supply. With the electric potential of the input-output common connection line made to be zero, by making the IGBT T4 and the second bidirectional switch means S2 alternately turned-on and -off, to the reactor Lo, a voltage is applied in which a voltage across the capacitor CN is added to (or negatively subtracted from) the positive voltage of the single-phase AC power supply Vac1 (section B). Moreover, by making the IGBT T3 and the second bidirectional switch means S2 alternately turned-on and -off, to the reactor Lo, a voltage is applied in which a voltage across the capacitor CP is added to (or negatively subtracted from) the negative voltage of the single-phase AC power supply Vac1 (section A).
For example, in a period in which the voltage of the single-phase AC power supply Vac1 is positive (section B), the turning-on of the IGBT T4 makes a voltage, having a waveform in which the waveform of the voltage across the capacitor CN (-E) is added to the waveform of the voltage of the single-phase AC power supply Vac1, applied to the reactor Lo. While, the turning-off of the IGBT T4 and the turning-on of the second bidirectional switch means S2 makes the voltage of the single-phase AC power supply Vac1 applied to the reactor Lo. In the section A, in a period in which the voltage of the single-phase AC power supply Vac1 is negative, the turning-on of the IGBT T3 makes a voltage, having a waveform in which the waveform of the voltage across the capacitor CP (+E) is added to the waveform of the voltage of the single-phase AC power supply Vac1, applied to the reactor Lo. While, the turning-off of the IGBT T3 and the turning-on of the second bidirectional switch means S2 makes the voltage of the single-phase AC power supply Vac1 applied to the reactor Lo. The voltages with these waveforms are shaped into sinusoidal waves with little distortions by a filter including the reactor Lo and the capacitor Co to be supplied to the load LD1.

By making the IGBTs T3 and T4 carry out on-off operations with a duty or a modulation method suited for the voltage variation in the single-phase AC power supply Vac1, a voltage without voltage variation is supplied to the load LD1. Here, the reactor Lo and the capacitor Co form a filter, which bears a role of shaping the waveform of the pulse-train-like waveform at the connection point in the second series circuit of switching devices into a sinusoidal waveform with a small distortion. Moreover, when the voltage variation in the single-phase AC power supply Vac1 is sufficiently small, no series compensation is necessary. Thus, the voltage of the single-phase AC power supply Vac1 can be directly supplied to the load LD1 (through outputting) . In the case of the electric power converter with the circuit configuration shown in FIG. 1, this can be actualized only by making the second bidirectional switch means S2 turned-on.

In case of power failure in the single-phase AC power supply Vac1, the single-phase AC power supply Vac1 is disconnected from the conversion circuit by the interrupter switch SW1 and the IGBTs T1 to T4 and the first and second bidirectional switch means S1 and S2 are controlled as a three-level inverter with the capacitors CP and CN used as DC power supplies to thereby allow the electric power converter to be uninterruptible.

Between the series connection point of the IGBTs T1 and T2 and the series connection point of the IGBTs T3 and T4, AC voltages at three electric potentials, the electric potential at point M, the electric potential at point P and the electric potential at point N, can be outputted. This can reduce harmonics included in an output signal to allow an AC filter including the reactors Li and Lo and the capacitor Co to be downsized.

### [Second Example]

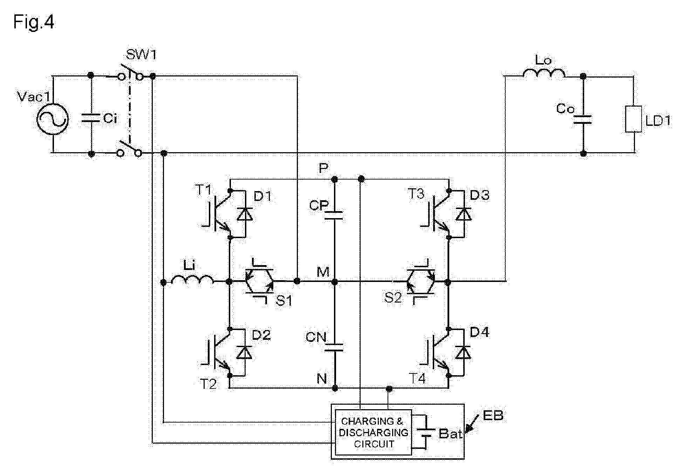

In FIG. 4, a circuit diagram is presented which shows a circuit configuration of a second example of the embodiment of the electric power converter according to the invention. This is an example in which a storage battery system EB, including components such as a storage battery Bat and a charging and discharging circuit, is connected in parallel to the series circuit of the capacitor CP and the capacitor CN in the first example shown in FIG. 1. The converter is effectively used in the case of making a long time backup for the power failure of the AC power supply. When the single-phase AC power supply Vac1 is sound, by charging the storage battery Bat with the charging and discharging circuit and, at the time of the power failure of the single-phase AC power supply Vac1, by discharging the energy stored in the storage battery Bat with the charging and discharging circuit, an uninterruptible electric power converter can be achieved. With respect to an inverter operation, the operation is similarly carried out to the operation of the electric power converter of the first example.

### [Third Example]

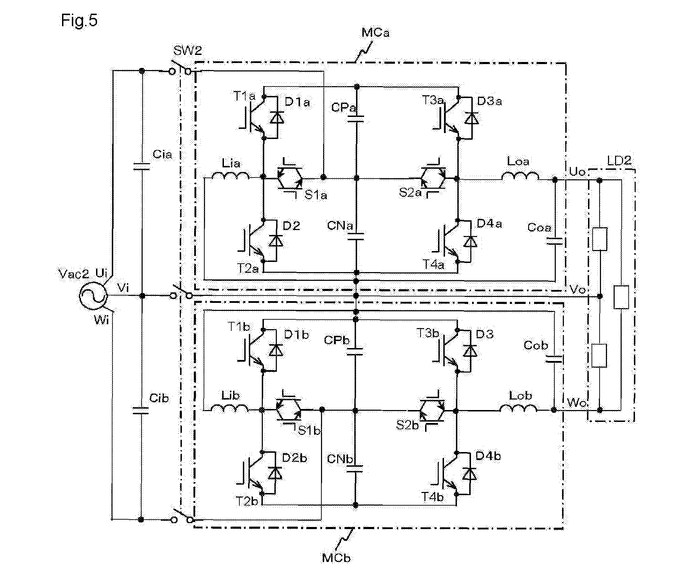

In FIG. 5, a circuit diagram is presented which shows a circuit configuration of a third example of the embodiment of the electric power converter according to the invention. This is an example in which an electric power converter for a three-phase circuit is formed by using two of the circuits in the first example shown in FIG. 1. An input voltage to the electric power converter in a phase Vi as one of three phases of Ui, Vi and Wi of a three-phase AC power supply Vac2 is transmitted to an input-output common connection line through a contactor for the phase Vi in a three-phase interrupter switch SW2 to be an output voltage in a phase Vo as one of three phases of Uo, Vo and Wo of a three-phase AC output. The circuit configuration is generally known as an open-delta connection. In the third example, one conversion circuit identical to the conversion circuit in the first example is connected as a conversion circuit MCa between the phase Vi and the phase Ui in the three-phase AC power supply Vac2 and the same one is further connected between the phase Vi and the phase Wi as a conversion circuit MCb. In addition, on the output side, a three-phase load LD2 is connected.
By controlling each of the control circuits MCa and MCb so that the phase difference between two phases of the three phases in the three-phase output becomes 120°, a three-phase output can be obtained. The operation of each of the conversion circuits MCa and MCb is the same as that in the first example, so that the explanation thereof will be omitted.
Moreover, like in the circuit in the second example, by connecting a storage battery system in parallel to the series circuit of capacitors in each of the conversion circuits MCa and MCb, the electric power converter can be achieved as being uninterruptible.
In addition, the bidirectional switch means used in the examples can be actualized by a configuration of connecting reverse blocking IGBTs in inverse-parallel, a configuration of connecting series circuits, each with a series connection of a reverse conducting IGBT and a diode, in inverse-parallel or a circuit with a combination of a single phase diode bridge circuit and an IGBT.

The invention relates to a rectifying circuit of voltage doubler rectifier type that converts AC electric power to DC electric power with a high power factor and a main circuit configuration of a series compensated electric power converter and is applicable to systems and devices such as an uninterruptible power system (UPS), a momentary voltage drop compensation system, an AC voltage regulator (AVR) and an AC power regulator (APR).
While the present invention has been particularly shown and described with reference to the preferred embodiment thereof, it will be understood by those skilled in the art that the foregoing and other changes in form and details can be made therein without departing from the spirit and scope of the present invention. Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. An electric power converter, wherein
a first series circuit of switching elements with a first and a second semiconductor switching devices, each having a diode connected in inverse parallel thereto, connected in series, and
a series circuit of capacitors with a first and a second capacitors connected in series
are connected in parallel,
between the connection point of the first and second semiconductor devices in the first series circuit of switching elements and the connection point of the first and second capacitors in the series circuit of capacitors, a first bidirectional switch means being connected,
the connection point in the first series circuit of switching elements and the connection point in the series circuit of capacitors being connected to their respective output ends of an AC power supply with at least one thereof through a reactor, and
one of output ends with both ends of the series circuit of capacitors and output ends with both of the connection point in the series circuit of capacitors and an output end of the AC power supply connected to the connection point in the first series circuit of switching elements being provided as DC output ends.

2. An electric power converter, comprising:
a first series circuit of switching devices formed with a first and a second semiconductor switching devices, each having a diode connected in inverse parallel thereto, connected in series;
a second series circuit of switching devices formed with a third and a fourth semiconductor switching devices, each having a diode connected in inverse parallel thereto, connected in series;
a series circuit of capacitors formed with a first and second capacitors connected in series;
a first bidirectional switch means connected between a series connection point in the first series circuit of switching devices and a series connection point in the series circuit of capacitors;
a second bidirectional switch means connected between a series connection point in the second series circuit of switching devices and the series connection point in the series circuit of capacitors;
a fourth capacitor connected in parallel to a load;
a first reactor connected between one end of the AC power supply, which end is connected to one end of the load, and the series connection point in the first series circuit of switching devices; and
a second reactor connected between the other end of the load and the series connection point in the second series circuit of switching devices,
the first series circuit of switching devices, the second series circuit of switching devices and the series circuit of capacitors being connected in parallel to be formed into a first parallel connection circuit,
the other end of the AC power supply being connected to the series connection point in the series circuit of capacitors,
the series circuit of capacitors, the second series circuit of switching devices and the second bidirectional switch means forming a series converter,
the series circuit of capacitors, the first series circuit of switching devices and the first bidirectional switch means forming a parallel converter, and
an amount of variation in the voltage of the AC power supply being compensated by the series converter to make a supply voltage to the load kept constant and, along with this, an amount of variation in the voltage across the capacitors caused by compensation operation of the series converter being compensated by the charging and discharging operations by the parallel converter carried out between the AC power supply and the parallel converter.

3. The electric power converter as claimed in claim 1 or 2, wherein in the charging of the series circuit of capacitors, the first reactor stores energy supplied from the AC power supply when the first bidirectional switch means is turned-on and, when the first bidirectional switch means is turned-off, transmits the stored energy to one of the first and second capacitors in the series circuit of capacitors, which is charged by the transmitted energy.

4. The electric power converter as claimed in claim 2 or 3, wherein the compensation operation of the series converter is one of an operation in which the third semiconductor switching device and the second bidirectional switch means are alternately turned-on and -off and an operation in which the fourth semiconductor switching device and the second bidirectional switch means are alternately turned-on and -off.

5. The electric power converter as claimed in any one of claims 2 to 4, wherein when the voltage of the AC power supply is directly supplied to the load as an AC output, the second bidirectional switch means is brought into a turned-on state.

6. The electric power converter as claimed in any one of claims 2 to 5, wherein at the time of power failure, the AC power supply is disconnected from the electric power converter by a switching means,
a three-level inverter circuit is formed with the first series circuit of switching devices, the second series circuit of switching devices and the first and second bidirectional switch means with the series circuit of capacitors used as a DC power supply, and
a three-level AC voltage obtained between the series connection point in the first series circuit of switching devices and the series connection point in the second series circuit of switching devices is supplied to the load with the waveform of the AC voltage smoothed by the first and second reactors and the fourth capacitor.

7. The electric power converter as claimed in any one of claims 1 to 6, wherein a storage battery system is connected in parallel to the series circuit of capacitors.

8. The electric power converter as claimed in any one of claims 1 to 7, wherein the bidirectional switch means is formed with reverse blocking semiconductor devices, each being provided with a reverse voltage blocking characteristic, connected in inverse parallel.

9. The electric power converter as claimed in any one of claims 1 to 7, wherein the bidirectional switch means is formed with series circuits, each with a semiconductor switching device being provided with no reverse voltage blocking characteristic and a diode connected in series, connected in inverse parallel.

10. An electric power converting system wherein with a first phase of a three-phase AC power supply made to be common to an input and an output, the electric power converters, each as claimed in any one of claims 1 to 9, are connected between the first phase and a second phase and between the first phase and a third phase, respectively.
